(19) Europäisches Patentamt
European Patent Office
Office européen des brevets

(11) EP 2 255 951 A1

(12) EUROPEAN PATENT APPLICATION
published in accordance with Art. 153(4) EPC

(43) Date of publication:
**01.12.2010 Bulletin 2010/48**

(21) Application number: **09715448.8**

(22) Date of filing: **22.01.2009**

(51) Int Cl.:
***B29C 55/14*** *(2006.01)* ***C08J 5/18*** *(2006.01)*
***B29K 67/00*** *(2006.01)* ***B29L 7/00*** *(2006.01)*

(86) International application number:
**PCT/JP2009/050965**

(87) International publication number:
**WO 2009/107425 (03.09.2009 Gazette 2009/36)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.02.2008 JP 2008047985**

(71) Applicant: **Kureha Corporation**
**Chuo-ku**
**Tokyo 103-8552 (JP)**

(72) Inventor: **ABE, Shunsuke**
**Tokyo 103-8552 (JP)**

(74) Representative: **Albrecht, Thomas et al**
**Kraus & Weisert**
**Patent- und Rechtsanwälte**
**Thomas-Wimmer-Ring 15**
**80539 München (DE)**

# (54) SUCCESSIVELY BIAXIALLY STRETCHED POLYGLYCOLIC ACID FILM, PROCESS FOR PRODUCING THE SUCCESSIVELY BIAXIALLY STRETCHED POLYGLYCOLIC ACID FILM, AND MULTILAYERED FILM

(57) A production process of a sequentially biaxially-oriented polyglycolic acid film, which includes Step 1 of stretching an amorphous polyglycolic acid sheet in one direction at a stretching temperature within a range of from 40 to 70°C and a primary draw ratio of 2.5 to 7.0 times, thereby forming a uniaxially oriented film; Step 2 of causing the uniaxially oriented film to pass through within a temperature environment controlled to a temperature within a range of from 5 to 40°C and lower by at least 5°C than the stretching temperature in Step 1; Step 3 of stretching the uniaxially oriented film in a direction perpendicular to the stretching direction in Step 1 at a stretching temperature within a range of from 35 to 60°C and higher by at least 3°C than the temperature in Step 2, thereby forming a biaxially oriented film, the area stretch ratio of which is 11 to 30 times; and Step 4 of subjecting the biaxially oriented film to a heat treatment at 70 to 200°C.

EP 2 255 951 A1

## Description

TECHNICAL FIELD

The present invention relates to a sequentially biaxially-oriented (stretched) polyglycolic acid film excellent in gas barrier properties, mechanical strength, transparency, resistance to heat shrinkage, etc. and a production process thereof. Since the sequentially biaxially-oriented polyglycolic acid film according to the present invention is small in oxygen transmission coefficient, high in falling ball impact strength and puncture strength, low in haze value and hence excellent in transparency, and also excellent in resistance to heat shrinkage owing to heat setting, the film can be suitably utilized as a single-layer or multi-layer film in a wide variety of technical fields of, for example, packaging materials for foods, medicines, electronic materials, etc.; and medical materials for culture sheets, artificial skins, scaffolds, etc.

BACKGROUND ART

Polyglycolic acid is a sort of aliphatic polyester resin containing aliphatic ester linkages in its molecular chain and is hence known to be degraded by microorganisms or enzymes present in the natural world such as soil and sea. With the increase in plastic products in recent years, disposal of plastic waste has become a great problem, and the polyglycolic acid attracts attention as a biodegradable polymeric material which imposes little burden on the environment. The polyglycolic acid is also utilized as a medical polymeric material for surgical sutures, artificial skins, scaffolds etc. because it has degradability and absorbability *in vivo.*

The polyglycolic acid can be produced by a process such as dehydration polycondensation of glycolic acid, dealcoholization polycondensation of an alkyl glycolate, desalting polycondensation of a glycolic acid salt or ring-opening polymerization of glycolide. Among these production processes, the ring-opening polymerization process of glycolide permits producing a high-molecular weight polyglycolic acid (also referred to as "polyglycolide") with good efficiency.

Since the polyglycolic acid is excellent in heat resistance, gas barrier properties, mechanical properties, etc. compared with other biodegradable polymeric materials such as aliphatic polyesters, its new uses have been developed as sheets, films, containers, injection-molded products, etc. However, the thermal properties of the polyglycolic acid have involved a problem that they are not always suitable for melt processing or stretch processing.

The polyglycolic acid is generally insufficient in melt stability, for example, in that it tends to generate gasses upon its melt processing. A polyglycolic acid homopolymer or a copolymer containing a repeating unit derived from glycolic acid in a high proportion is a crystalline polymer. Such a crystalline polymer is extremely difficult to be subjected to stretch processing because of its strong tendency to rapidly crystallize upon its forming processing.

The crystalline polyglycolic acid can provide an amorphous polyglycolic acid sheet by, for example, melt-processing it into the form of a sheet and quenching the resultant sheet. The thermal properties of the polyglycolic acid can be analyzed by using such an amorphous product as a sample by means of a differential scanning calorimeter (DSC).

When the amorphous product of the polyglycolic acid is heated at a fixed heating rate, a glass transition temperature Tg is detected as an endothermic peak first appearing on its calorimetric curve, and a crystallization temperature $Tc_1$ is then detected as an exothermic peak. When the temperature is further raised, the crystallization of the polyglycolic acid is caused to proceed. However, when the temperature is raised to a temperature higher than a certain temperature, the polyglycolic acid starts melting, and a melting point Tm is detected as an endothermic peak. The polyglycolic acid in the molten state is amorphous. When a sample of the polyglycolic acid in the molten state is cooled at a fixed cooling rate, the polyglycolic acid starts crystallizing, and a crystallization temperature $Tc_2$ is detected as a first exothermic peak.

In general, stretch processing of a crystalline thermoplastic resin is conducted under temperature conditions within a range of from the glass transition temperature Tg to the crystallization temperature $Tc_1$. In case where the thermoplastic resin is melt-processed into the form of a sheet or fiber, and the resultant sheet or fiber is then subjected to stretch processing, a stretching temperature lower than the glass transition temperature Tg makes it impossible to conduct stretching or tends to cause breaking during stretch processing because the sheet or fiber is hard. A stretching temperature higher than the crystallization temperature $Tc_1$ makes it impossible to conduct stretching or tends to cause breaking during stretch processing because the crystallization is caused to proceed.

By the way, the polyglycolic acid is relatively small in a temperature difference $Tc_1$ - Tg between the glass transition temperature Tg and the crystallization temperature $Tc_1$ detected in the course of heating in the DSC measurement, so that it is difficult to conduct stretch processing. In general, a thermoplastic resin small in this temperature difference $Tc_1$ - Tg involves a problem that a stretchable temperature range is narrow upon stretch processing of a sheet, fiber or the like formed from such a resin, or stretch blow molding of the resin. On the other hand, the polyglycolic acid is high in crystallization temperature $Tc_2$ detected in the course of its cooling from a molten state and relatively small in a temperature difference Tm - $Tc_2$ between the melting point Tm and the crystallization temperature $Tc_2$ thereof. A thermoplastic resin small in this temperature difference Tm - $Tc_2$ tends to crystallize upon cooling of a sheet or fiber

extruded from such a resin from its molten state and is difficult to provide a transparent formed product. Therefore, the forming processing of the polyglycolic acid has involved a problem that forming conditions such as forming temperature and stretching temperature are limited to narrow ranges.

A biaxially oriented film of the polyglycolic acid is expected to enhance the gas barrier properties and mechanical properties thereof by the stretch processing. Therefore, there have been proposed various processes for producing a biaxially oriented film of the polyglycolic acid.

For example, Japanese Patent Application Laid-Open No. 10-60136 (Patent Literature 1) discloses an oriented film composed of a thermoplastic resin material comprising polyglycolic acid and a production process thereof. The Patent Literature 1 discloses a production process of a biaxially oriented film, in which a thermoplastic resin material comprising polyglycolic acid is melt-extruded into a sheet from a T-die, and the extrudate is quenched and then stretched in a machine direction through stretching rolls at a temperature of Tg to $Tc_1$ and then in a transverse direction at the temperature of Tg to $Tc_1$.

Japanese Patent Application Laid-Open No. 2006-130848 (Patent Literature 2) proposes a laminated film of a biaxially oriented polyglycolic acid film and a biaxially oriented sulfonate group-containing aromatic polyester film. As an example of a stretching process, Patent Literature 2 discloses a process, in which polyglycolic acid and sulfonate group-containing aromatic polyester are coextruded, the resultant laminated sheet is stretched in a machine direction by stretching rolls at a stretching temperature of 55 to 70°C, and the resultant uniaxially oriented film is then stretch in a transverse direction by a tenter at a temperature of 60 to 90°C.

Japanese Patent Application Laid-Open No. 2006-182017 (Patent Literature 3) proposes a production process of a biaxially oriented film composed of a resin mainly comprising polyglycolic acid. Patent Literature 3 discloses a process, in which the resin mainly comprising polyglycolic acid is formed into an unstretched sheet, and the temperature of the film upon stretching is controlled within a range of from (Tg + 2)°C to (Tg + 20)°C to sequentially biaxially-stretching the resultant unstretched film in machine and transverse directions.

As described above, while the various processes for producing the biaxially oriented film by sequentially biaxially-stretching the polyglycolic acid have been proposed, most of these processes have a principal feature in that the stretching temperature is controlled. However, it has been difficult to produce a sequentially biaxially-oriented polyglycolic acid film having satisfactory various properties on an industrial scale according to the conventional processes that the stretching temperature is simply controlled.

More specifically, according to the processes that the stretching temperature is controlled, a waviness phenomenon or whitening phenomenon of a film is easy to occur upon stretch processing. According to a sequentially biaxially-stretching process by a roll/tenter system with stretching rolls and a tenter stretching machine combined, a uniaxially oriented film formed by roll stretching tends to shrink, and so it is difficult to surely grasp both edges of the film by chucks of the tenter stretching machine to biaxially stretch the film. Therefore, it has been extremely difficult to stably and continuously produce a sequentially biaxially-oriented polyglycolic acid film excellent in gas barrier properties, mechanical properties, transparency, resistance to heat shrinkage, etc. according to any conventional process.

Patent Literature 1: Japanese Patent Application Laid-Open No. 10-60136 (corresponding to U.S. Patent No. 5,853,639)
Patent Literature 2: Japanese Patent Application Laid-Open No. 2006-130848
Patent Literature 3: Japanese Patent Application Laid-Open No. 2006-182017

## DISCLOSURE OF THE INVENTION

### TECHNICAL PROBLEM

It is an object of the present invention to provide a process for stably and continuously producing a sequentially biaxially-oriented polyglycolic acid film excellent in gas barrier properties, mechanical properties, transparency, resistance to heat shrinkage, etc.

Another object of the present invention is to provide a sequentially biaxially-oriented polyglycolic acid film excellent in gas barrier properties, mechanical strength, transparency, resistance to heat shrinkage, etc.

A further object of the present invention is to provide a multi-layer film having a layer structure with the sequentially biaxially-oriented polyglycolic acid film excellent in such various properties as described above laminated on a base.

If a biaxially-oriented film of polyglycolic acid can be formed by a sequentially biaxially-stretching system, a flat sequentially biaxially-oriented polyglycolic acid film can be obtained by the ordinary roll/tenter combination system. As described above, however, it is actually difficult to stably and continuously produce a sequentially biaxially-oriented polyglycolic acid film having satisfactory properties by applying the sequentially biaxially-stretching process.

The present inventors have carried out a detailed investigation as to the cause that the production of a sequentially biaxially-oriented film of polyglycolic acid is difficult. As a result, it has been found that the production involves the following problems. An amorphous polyglycolic acid sheet itself subjected to stretch processing can be relatively easily

produced by precisely controlling conditions such as a melt-forming temperature of polyglycolic acid and a quenching temperature.

According to the sequentially biaxially-stretching process, the temperature of an amorphous sheet is generally controlled to a temperature suitable for stretching to primarily stretch the sheet in a lengthwise direction [also referred to as a longitudinal direction (machine direction; MD)] by means of stretching rolls. The stretching by the stretching rolls is conducted by utilizing a difference in the number of revolutions between groups of rolls. When a crystalline thermoplastic resin is used, the stretching temperature in the primarily stretching step is controlled to a temperature within the above-described range of from the glass transition temperature Tg to the crystallization temperature $Tc_1$. In the sequentially biaxially-stretching process, the uniaxially oriented film formed in the primarily stretching step is generally secondarily stretched in a crosswise direction (a transverse direction to the machine direction; TD; also referred to as "a width direction") by means of a tenter stretching machine.

However, it has been found that since the uniaxially oriented film of polyglycolic acid is held at a relatively high stretching temperature in the primarily stretching step, while the crystallization temperature $Tc_1$ of the polyglycolic acid is low to easily cause crystallization, partial crystallization of the uniaxially oriented film tends to proceed after the primary stretching and before the secondary stretch processing by the tenter stretching machine.

When the crystallization of the uniaxially oriented film overproceeds before the secondary stretch processing, it is difficult or impossible to conduct the secondary stretch processing itself. When the partial crystallization occurs in the uniaxially oriented film, the mechanical properties and transparency of the resulting sequentially biaxially-oriented film are deteriorated, or whitened stripe-like marks mainly appear at a central portion of the film even though the secondary stretch processing can be conducted.

It has been found that the uniaxially oriented film of the polyglycolic acid tends to shrink in both longitudinal and width directions due to the natural characteristic of the polyglycolic acid. When shrinkage or whitening occurs on the uniaxially oriented film, the appearance of a biaxially oriented film obtained finally is impaired. In addition, when the uniaxially oriented film shrinks in both longitudinal and width directions, it is difficult to surely grasp both edges of the uniaxially oriented film by the chucks of the tenter stretching machine in the sequentially biaxially-stretching process of the roll/tenter combination system.
As a result, it is difficult to stably subject the uniaxially oriented film to stretch processing by the tenter, and so waving occurs on the film during stretching, or thickness mottling (unevenness) occurs on the resulting sequentially biaxially-oriented polyglycolic acid film.

If the uniaxially oriented film shrinks in a width direction, the thickness of a central portion thereof becomes relatively great, and besides a whitening phenomenon at the central portion tends to more proceed due to an excess of preheating time at that portion. The uniaxially oriented film tends to crystallize because its molecular chains are oriented in a uniaxial direction. In particular, the central portion thereof, which is slowest in initiation of stretching upon stretching by the tenter, has a strong tendency to crystallize before stretching. As a result, a portion unstretched by the tenter and an insufficiently stretched portion in the resulting sequentially biaxially-oriented polyglycolic acid film appear as white stripe-like marks, and so such a biaxially-oriented film incurs marked deterioration of appearance.

Thus, the present inventors have carried out an extensive investigation with a view toward solving these various problems to achieve the above objects. As a result, the inventors have reached a process, in which stretching temperatures and draw ratios in a primarily stretching step and a secondarily stretching step are controlled within respective specific ranges, the temperature of a uniaxially oriented film formed in the primarily stretching step is lowered to a temperature within a specific range after the primarily stretching step, and the uniaxially oriented film is then subjected to the secondarily stretching step.

Specifically, a thermoplastic resin material comprising a crystalline polyglycolic acid is used to form an amorphous sheet, and the sheet is first uniaxially stretched at a relatively high draw ratio under temperature conditions of 40 to 70°C in the primarily stretching step when the sheet is sequentially biaxially-stretched. The resultant uniaxially oriented film is then caused to pass through within a temperature environment lower than that in the primarily stretching step to cool the film. This cooling step can not only inhibit the crystallization of the uniaxially oriented film from proceeding, but also inhibit the film from shrinking in both longitudinal and width directions.

When the uniaxially oriented film is inhibited from shrinking in both longitudinal and width directions by arranging the cooling step, both edges of the uniaxially oriented film can be surely grasped by chucks of a tenter stretching machine even when a tenter stretching machine is used in the secondarily stretching step. In the secondarily stretching step, the uniaxially oriented film can be stretched at a temperature within a range of from a relatively low temperature somewhat lower than Tg to 60°C because the crystallization of the uniaxially oriented film is inhibited from proceeding.

A primary draw ratio in the primarily stretching step and a secondary draw ratio in the secondarily stretching step are controlled to control the secondary draw ratio in such a manner that an area stretch ratio represented by a product of these draw ratios falls within a range of from 11 to 30 times. The area stretch ratio of the resulting sequentially biaxially-oriented film is made high, whereby a sequentially biaxially-oriented polyglycolic acid film excellent in transparency and mechanical properties can be produced. In a final step, the biaxially oriented film is subjected to a heat treatment

in a tensioned state, whereby the state of molecular orientation can be set to impart resistance to heat shrinkage to the film.

According to the production process of the present invention, there can be stably and continuously produced a sequentially biaxially-oriented polyglycolic acid film excellent in gas barrier properties and mechanical properties such as falling ball impact strength and puncture strength, small in haze value, free of occurrence of white stripe-like marks and thickness unevenness and good in resistance to heat shrinkage. The present invention has been led to completion on the basis of these findings.

SOLUTION TO PROBLEM

According to the present invention, there is thus provided a production process of a sequentially biaxially-oriented polyglycolic acid film, comprising the following Steps 1 to 4:

(1) Step 1 of stretching an amorphous polyglycolic acid sheet formed from a resin material comprising a crystalline polyglycolic acid containing a repeating unit represented by the following formula 1

[Chem. 1]

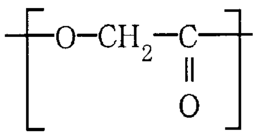

(1)

in a proportion of at least 60% by mass in one direction at a stretching temperature within a range of from 40 to 70°C in such a manner that a primary draw ratio falls within a range of from 2.5 to 7.0 times, thereby forming a uniaxially oriented film;

(2) Step 2 of causing the uniaxially oriented film to pass through within a temperature environment controlled to a temperature within a range of from 5 to 40°C and lower by at least 5°C than the stretching temperature in Step 1;
(3) Step 3 of stretching the uniaxially oriented film passed through Step 2 in a direction perpendicular to the stretching direction in Step 1 at a stretching temperature within a range of from 35 to 60°C and higher by at least 3°C than the temperature in Step 2 in such a manner that a secondary draw ratio falls within a range of from 2.5 to 6.0 times, thereby forming a biaxially oriented film, the area stretch ratio represented by a product of the primary draw ratio and the secondary draw ratio of which falls within a range of from 11 to 30 times; and
(4) Step 4 of subjecting the biaxially oriented film to a heat treatment at a temperature within a range of from 70 to 200°C.

According to the present invention, there is also provided a sequentially biaxially-oriented polyglycolic acid film formed of a resin material comprising a crystalline polyglycolic acid containing a repeating unit represented by the following formula 1

[Chem. 2]

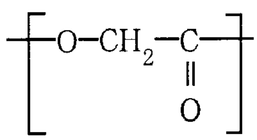

(1)

in a proportion of at least 60% by mass, wherein

(a) the oxygen transmission coefficient of the film is within a range of from 1.0 x $10^{-14}$ to 1.0 x $10^{-12}$ $cm^3 \cdot cm/cm^2 \cdot s \cdot cmHg$ as measured under conditions of a temperature of 23°C and a relative humidity of 80%,
(b) the falling ball strength of the film is within a range of 50 to 300 J/m as measured under conditions of a temperature of 23°C and a relative humidity of 50%,
(c) the puncture strength of the film is within a range of from 6 to 30 J/m as measured under conditions of a temperature of 23°C and a relative humidity of 50%, and
(d) the haze value of the film is within a range of from 0.01 to 10% as measured by using a sample obtained by cutting out a central portion in the width direction of the film into a square of 5 cm x 5 cm in accordance with Japanese Industrial Standard JIS K 7361.

According to the present invention, there is further provided a multi-layer film having a layer structure with the sequentially biaxially-oriented polyglycolic acid film described above laminated on a base.

ADVANTAGEOUS EFFECTS OF INVENTION

According to the present invention, there can be stably and continuously produced a sequentially biaxially-oriented polyglycolic acid film excellent in gas barrier properties, mechanical strength, transparency and resistance to heat shrinkage. According to the present invention, there can be provided a sequentially biaxially-oriented polyglycolic acid film small in oxygen transmission coefficient and hence excellent in gas barrier properties, excellent in mechanical properties such as falling ball impact strength and puncture strength, small in haze value and hence excellent in transparency, and also excellent in resistance to heat shrinkage.
According to the present invention, there can further be provided a multi-layer film having a layer structure with the sequentially biaxially-oriented polyglycolic acid film having these excellent various properties laminated on a base.
The sequentially biaxially-oriented polyglycolic acid film according to the present invention can be suitably utilized as a single-layer or multi-layer film in a wide variety of technical fields of, for example, packaging materials for foods, medicines, electronic materials, etc.; and medical materials for culture sheets, artificial skins, scaffolds, etc.

BEST MODE FOR CARRYING OUT THE INVENTION

1. Polyglycolic acid

The polyglycolic acid of the present invention is a homopolymer or copolymer containing a repeating unit represented by the following formula (1).
[Chem. 3]

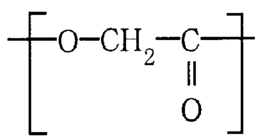

(1)

The content of the repeating unit represented by the formula (1) in the polyglycolic acid is at least 60% by mass, preferably at least 65% by mass, more preferably at least 70% by mass, particularly preferably at least 75% or 80% by mass. The upper limit of the repeating unit represented by the formula (1) is 100% by mass (homopolymer). If the content of the repeating unit represented by the formula (1) is too low, the crystallinity thereof is deteriorated to impair various properties such as gas barrier properties, mechanical properties and heat resistance.
The polyglycolic acid according to the present invention is a crystalline polymer having a melting point. Such a polyglycolic acid can be produced by a process of polycondensing glycolic acid, a glycolic acid alkyl ester or a glycolic acid salt. The polyglycolic acid can also be synthesized by ring-opening polymerization of glycolide.
The polycondensation or ring-opening polymerization is generally performed in the presence of a catalyst. No particular limitation is imposed on the catalyst. However, as examples thereof, may be mentioned tin compounds such as tin halides (for example, tin dichloride and tin tetrachloride) and tin organic carboxylates (for example, tin octanoate and tin octylate); titanium compounds such as alkoxytitanates; aluminum compounds such as alkoxyaluminum; zirconium compounds such as zirconium acetylacetone; and antimony compounds such as antimony halides and antimony oxide.

In order to produce a copolymer of glycolic acid as the polyglycolic acid, a monomer such as glycolide or glycolic acid is copolymerized with various kinds of comonomers. As examples of the comonomers, may be mentioned cyclic monomers such as ethylene oxalate (i.e., 1,4-dioxane-2,3-dione), lactide, lactones (for example, β-propiolactone, β-butyrolactone, pivalolactone, γ-butyrolactone, δ-valerolactone, β-methyl-δ-valerolactone and ε-caprolactone), trimethylene carbonate and 1,3-dioxane; hydroxycarboxylic acids such as lactic acid, 3-hydroxypropanoic acid, 3-hydroxybutanoic acid, 4-hydroxybutanoic acid and 6-hydroxycaproic acid, and alkyl esters thereof; substantially equimolar mixtures of an aliphatic diol such as ethylene glycol or 1,4-butanediol and an aliphatic dicarboxylic acid such as succinic acid or adipic acid or an alkyl ester thereof; and two or more compounds thereof. Glycolide and glycolic acid may be used in combination.

Among these comonomers, the cyclic monomers such as lactide, caprolactone and trimethylene carbonate; and the hydroxycarboxylic acids such as lactic acid are preferred in that they are easy to be copolymerized and easy to provide a copolymer excellent in physical properties. When glycolide is used as a raw material of the polyglycolic acid, a cyclic monomer such as lactide, caprolactone or trimethylene carbonate is preferably used as the comonomer. Glycolide and the cyclic monomer are easy to be subjected to ring-opening copolymerization. Preferable examples of polyglycolic acid copolymers include copolymer of glycolide and lactide and copolymers of glycolide and caprolactone. As the lactide is preferred L-lactide from the viewpoint of easy availability. As the caprolactone is preferred ε-caprolactone.

When the comonomer is used, the comonomer is used in a proportion of generally at most 40% by mass, preferably at most 35% by mass, more preferably at most 30% by mass, particularly preferably at most 25% or 20% by mass based on all monomers charged. If the proportion of the comonomer copolymerized is high, the crystallinity of a polymer formed is liable to be impaired. If the crystallinity ofpolyglycolic acid is impaired, gas barrier properties, mechanical properties, heat resistance, etc. of the resulting sequentially biaxially-oriented polyglycolic acid film are deteriorated.

As the crystalline polyglycolic acid is preferred a polyglycolic acid homopolymer or a ring-opening copolymer of glycolide and at least one cyclic monomer selected from the group consisting of ethylene oxalate, lactide, lactones, trimethylene carbonate and 1,3-dioxane.

A polymerizer for the polyglycolic acid may be suitably selected from among various kinds of apparatus such as extruder type, vertical type having a paddle blade, vertical type having a helical ribbon blade, horizontal type of a kneader type, ampoule type, and ring type.

The polymerization temperature can be preset within a range of from 120°C, which is a substantial polymerization-initiating temperature, to 300°C according to the purpose. The polymerization temperature is preferably 130 to 250°C, more preferably 140 to 220°C, particularly preferably 150 to 200°C. If the polymerization temperature is too high, a polymer formed tends to undergo thermal decomposition. The polymerization time is within a range of from 3 minutes to 20 hours, preferably from 5 minutes to 18 hours. If the polymerization time is too short, it is hard to sufficiently advance the polymerization. If the time is too long, a polymer formed tends to be colored. The polyglycolic acid is preferably shaped into pellets having an even grain size from solids after the polymerization.

The weight average molecular weight (Mw) of the polyglycolic acid used in the present invention is within a range of generally from 30,000 to 800,000, preferably from 50,000 to 500,000 in terms of polymethyl methacrylate in measurement by gel permeation chromatography (GPC) using hexafluoroisopropanol as a solvent. The melt viscosity of the polyglycolic acid of the present invention is within a range of generally from 100 to 10,000 Pa·s, preferably from 200 to 8,000 Pa·s, more preferably from 300 to 4,000 Pa·s as measured at a temperature (Tm+20°C) higher by 20°C than the melting point Tm of the polyglycolic acid and a shear rate of 122 $sec^{-1}$. If the weight average molecular weight or melt viscosity of the polyglycolic acid is too low, the resulting sequentially biaxially-oriented polyglycolic acid film tends to deteriorate mechanical properties and heat resistance. If the weight average molecular weight or melt viscosity is too high, it may be difficult in some cases to conduct melt extrusion or stretch processing.

The polyglycolic acid has a hydroxyl group and/or a carboxyl group at a terminal thereof upon synthesis. The polyglycolic acid used in the present invention can be end-capped with a non-acid forming OH group-capping agent and/or a carboxyl group-capping agent. The polyglycolic acid exhibits hydrolyzability and is liable to be colored during its melt processing. The non-acid forming OH group-capping agent and/or a carboxyl group-capping agent is incorporated into the polyglycolic acid, whereby the water resistance and hydrolyzability of the polyglycolic acid can be improved, and its coloring can be inhibited.

The term "non-acid forming" in the non-acid forming OH group-capping agent means that no carboxyl group is formed upon bonding to the OH group remaining in the polyglycolic acid to capping it. As the non-acid forming OH group-capping agent, is used a diketene compound, isocyanate or the like. Among these OH group-capping agents, the diketene compound is preferred from the viewpoint of reactivity. The terminal OH group-capping agent is used in a proportion of generally 0.01 to 20 parts by mass, preferably 0.1 to 10 parts by mass per 100 parts by mass of the polyglycolic acid.

As the carboxyl group-capping agent, may be used a compound having a terminal carboxyl group-capping effect and known as a water resistance improver for aliphatic polyesters. Specific example of the carboxyl group-capping agent include carbodiimide compounds such as N,N-2,6-diisopropylphenyl-carbodiimide; oxazoline compounds such

as 2,2'-m-phenylenebis(2-oxazoline), 2,2'-p-phenylenebis(2-oxazoline), 2-phenyl-2-oxazoline and styrene·isopropenyl-2-oxazoline; oxazine compounds such as 2-methoxy-5,6-dihydro-4H-1,3-oxazine; epoxy compounds such as N-glycidylphthalimide, cyclohexene oxide and tris(2,3-epoxypropyl) isocyanulate.

Among these carboxyl group-capping agents, the carbodiimide compounds are preferred. The carbodiimide compound may be any of aromatic, alicyclic and aliphatic carbodiimide compounds. Among these, aromatic carbodiimide compounds are particularly preferred. A carbodiimide compound having a higher purity has a far excellent water-resisting and stabilizing effect. The carboxyl group-capping agent is used in a proportion of generally 0.01 to 10 parts by mass, preferably 0.05 to 2.5 parts by mass per 100 parts by mass of the polyglycolic acid.

In the present invention, the polyglycolic acid homopolymer or copolymer may be used by itself as a resin material. In the present invention, a resin composition with the polyglycolic acid blended with another thermoplastic resin may also be used as the resin material.

As another thermoplastic resin blended with the polyglycolic acid, is preferred one which does not impede various properties of the polyglycolic acid, such as gas barrier properties, mechanical properties and transparence. Examples of another thermoplastic resin include polyolefin resins such as polyethylene, polypropylene, ethylene-vinyl acetate copolymers and ethylene-methyl methacrylate copolymers; thermoplastic polyester resins such as polyethylene terephthalate and polybutylene terephthalate; poly(aromatic vinyl) resins such as polystyrene and poly($\alpha$-methylstyrene); chlorine-containing resins such as polyvinylidene chloride; polyamide resins; polycarbonate resins; cycloolefin resins; polyurethane resins; ethylene-vinyl alcohol copolymers (EVOH); and other aliphatic polyester resins.

Among other thermoplastic resins, other aliphatic polyester resins such as polylactic acid are preferred in that such resins have biodegradability and are easy to be composted, and polyolefin resins such as polypropylene are preferred from the viewpoints of water resistant, stretchability, heat sealability, etc.

In the blend of the polyglycolic acid and another thermoplastic resin, the proportion of the polyglycolic acid blended is preferably at least 70% by mass, more preferably at least 75% by mass, particularly preferably at least 80% by mass. If the proportion of another thermoplastic resin blended is too high, the resulting sequentially biaxially-oriented polyglycolic acid film shows a tendency to deteriorate the gas barrier properties, mechanical properties, transparency, etc. thereof.

The resin material used in the present invention preferably comprises, as a resin component, a crystalline polyglycolic acid or a mixture of at least 70% by mass of the crystalline polyglycolic acid and at most 30% by mass of another thermoplastic resin.

A heat stabilizer may be blended with the polyglycolic acid used in the present invention for improving melt stability. As the heat stabilizer, is preferred a heavy metal deactivator, a phosphate having a pentaerythritol skeleton structure, a phosphorus compound having at least one hydroxyl group and at least one long-chain alkyl ester group, a metal carbonate or the like. These compounds may be used either singly or in any combination thereof.

Since many of phosphorus compounds such as phosphite antioxidants rather exhibit an effect to impede the melt stability of the polyglycolic acid, it is not preferable to use such a compound as the heat stabilizer. On the other hand, the phosphate having a pentaerythritol skeleton structure exhibits an effect to specifically improve the melt stability of the polyglycolic acid. Specific examples of the phosphate having the pentaerythritol skeleton structure include cyclic neopentanetetraylbis(2,6-di-tert-butyl-4-methylphenyl)phosphite, cyclic neopentanetetraylbis(2,4-di-tert-butylphenyl) phosphite, bis(monononylphenyl)pentaerythritol diphosphite and bis(4-octadecylphenyl)-pentaerythritol diphosphite.

Among the phosphorus compounds, phosphorus compounds having at least one hydroxyl group and at least one long-chain alkyl ester group are preferred. The number of carbon atoms in the long-chain alkyl is preferably within a range of from 8 to 24. Specific examples of such a phosphorus compound include mono-or di-stearyl acid phosphate.

Example of the heavy metal deactivator include 2-hydroxy-N-1H-1,2,4-triazol-3-yl-benzamide and bis[2-(2-hydroxybenzoyl)hydrazin]dodecanediacid. Examples of the metal carbonate include calcium carbonate and strontium carbonate.

The proportion of the heat stabilizer incorporated is generally 0.001 to 5 parts by mass, preferably 0.003 to 3 parts by mass, more preferably 0.005 to 1 part by mass per 100 parts by mass of the polyglycolic acid.

Various kinds of additives such as a plasticizer, an inorganic filler, a catalyst deactivator, a heat radiation absorber, an ultraviolet light absorber, a light stabilizer, a moisture-proofing agent, a water-proofing agent, a water repellant, a lubricant, a parting agent, a coupling agent, a pigment and a dye may be blended with the polyglycolic acid if desired. These various additives are preferably blended in an extremely small proportion within the limits not impeding the stretchability, gas barrier properties, transparency, mechanical properties, etc. of the resulting sequentially biaxially-oriented polyglycolic acid film. These additives are blended in a proportion of generally at most 10 parts by mass, preferably at most 5 parts by mass, more preferably at most 3 parts by mass per 100 parts by mass of the polyglycolic acid according to the respective functions and uses.

2. Amorphous polyglycolic acid sheet

In the present invention, a resin material comprising the crystalline polyglycolic acid containing the repeating unit represented by the formula 1 in a proportion of at least 60% by mass is used to form an amorphous polyglycolic acid sheet. No particular limitation is imposed on a production process of the amorphous polyglycolic acid sheet. However, a process, in which the polyglycolic acid or the polyglycolic acid and other components are melted and kneaded by means of an extruder and melt-extruded into a sheet from a T-die provided at the tip of the extruder, and the molten sheet is quenched to a temperature lower than the crystallization temperature $Tc_1$, may preferably be adopted. Upon the quenching, a method, in which the molten sheet is cast and quenched on a metal drum kept at a surface temperature within a range of from 5 to 70°C, often from 10 to 50°C, is preferably adopted.

The melting and kneading is preferably conducted at a temperature within a range of from not lower than the melting point Tm of the polyglycolic acid to not higher than 300°C. The polyglycolic acid sheet in the molten state extruded from the T-die is quenched, whereby the crystallization can be inhibited to obtain a substantially amorphous polyglycolic acid sheet. The production process itself of such an amorphous sheet is a technique well-known in this technical field.

As the amorphous polyglycolic acid sheet, may be used that wound on a roll. When a sequentially biaxially-oriented polyglycolic acid film is produced in a continuous line, however, the above-described production process is preferably arranged as a first step of this line.

The thickness of the amorphous polyglycolic acid sheet is generally 70 to 1,000 μm, preferably 100 to 800 μm, more preferably 150 to 600 μm. Accordingly, this sheet may include a case where the sheet has a thickness (less than 250 μm) as a film. Thus, the sheet may be referred to as an unstretched film.

The degree of crystallinity of the amorphous polyglycolic acid sheet requires to be set within a range, in which the stretch processing is not prevented, and is generally at most 20%, preferably at most 15%, more preferably at most 10%. The degree of crystallinity can be calculated out in accordance with the following equation from a sample density p, a crystal density $\rho_c$ and a density $\rho_a$ in an amorphous state by determining the density of a sample by means of a density-gradient tube:

$$\text{Degree of crystallinity} = [\rho_c(\rho - \rho_a) / \rho(\rho_c - \rho_a)] \times 100.$$

3. Primarily stretching step 1

In the present invention, the amorphous polyglycolic acid sheet is stretched in one direction at a stretching temperature within a range of from 40 to 70°C in such a manner that a primary draw ratio falls within a range of from 2.5 to 7.0 times, thereby forming a uniaxially oriented film. This step is referred to as a primarily stretching step.

In order to produce a sequentially biaxially-oriented film, a system that stretching rolls and a tenter stretching machine are combined is generally adopted. The order of the combination of the stretching by the rolls and the stretching by the tenter is optional. With respect to the order of stretching, any of stretching in a longitudinal direction (a machine direction to which the sheet is sent out; MD) and stretching in a transverse direction (a direction perpendicular to the machine direction; TD) may be first conducted. The primarily stretching step may be conducted continuously with a secondarily stretching step subsequent thereto. However, this step may also be conducted in an off-line if desired.

In the present invention, a process, in which the primarily stretching step is conducted by roll stretching using stretching rolls, the subsequent secondarily stretching step is conducted by tenter stretching using a tenter stretching machine, and these steps continuously conducted, is preferably adopted from the viewpoints of enhancing productivity and precisely controlling stretching conditions in the respective steps. Accordingly, in the primarily stretching step, it is preferable to uniaxially stretch the amorphous polyglycolic acid sheet in the machine direction (MD).

Methods for heating the polyglycolic acid sheet to a stretching temperature within a range of from 40 to 70°C in the primarily stretching step include a method of causing the sheet to pass through between heated rolls and a method of causing the sheet to pass through within a dry heat atmosphere.

The stretching temperature in the primarily stretching step is preferably 43 to 68°C, more preferably 45 to 65°C. The glass transition temperature Tg of the polyglycolic acid homopolymer is about 39°C. The crystallization temperature Tc1 of the polyglycolic acid homopolymer is about 90°C though it may vary according to the thermal hysteresis of the homopolymer. Accordingly, the primarily stretching step comes to be performed within a temperature range of from not lower than Tg of the polyglycolic acid to not higher than $Tc_1$. Tg and $Tc_1$ of the polyglycolic acid are varied by copolymerization with a comonomer. Even when the copolymer with the comonomer is used, however, the primarily stretching step is preferably performed in a temperature range of from 40 to 70°C and from not lower than Tg of the copolymer to not higher than $Tc_1$ likewise. If the stretching temperature in the primarily stretching step is too high, the crystallization of the resulting uniaxially oriented film is caused to proceed, so that breaking of the film is caused, or it is difficult or

impossible to conduct the subsequent secondary stretch processing.

The draw ratio of the primarily stretching step is within a range of from 2.5 to 7.0 times, preferably from 3.0 to 6.5 times, more preferably from 3.0 to 6.0 times. The draw ratio of the primarily stretching step is set within the above-described range, whereby lowering of productivity due to breaking of the film, or the like can be prevented, and sufficient gas barrier properties and mechanical strength can be imparted to the resulting sequentially biaxially-oriented polyglycolic acid film.

The stretching speed in the primarily stretching step is preferably 0.2 to 50 m/min, more preferably 0.5 to 30 m/min. The stretching speed in case of using the stretching rolls means a speed at the time the sheet passed through the stretching rolls. If this stretching speed is too low, the productivity is lowered. If the speed is too high, the time required to heat the sheet to the stretching temperature is insufficient, so that it may be difficult or impossible in some cases to conduct the stretching.

4. Cooling step 2

The uniaxially oriented film obtained in the primarily stretching step is caused to pass through within a temperature environment controlled to a temperature within a range of from 5 to 40°C and lower by at least 5°C than the stretching temperature in the step 1. By this step 2, at least the surface temperature of the uniaxially oriented film is cooled to a temperature equivalent to the temperature (cooling temperature) in this environment. Therefore, this step 2 is referred to as a cooling step.

The uniaxially oriented film is heated to a temperature within the range of from 40 to 70°C in the primarily stretching step. However, the film tends to partially crystallize before the subsequent secondary stretch processing is conducted because the crystallization temperature $Tc_1$ of the polyglycolic acid is low, and the crystallization speed of the polyglycolic acid is fast. If the uniaxially oriented film partially crystallizes, it is difficult or impossible to conduct the secondary stretch processing.

The uniaxially oriented film of the polyglycolic acid shows a tendency to shrink in both longitudinal and crosswise directions, and it is thus difficult to grasp both edges of the uniaxially oriented film by chucks of the tenter stretching machine upon the subsequent secondary stretching by the tenter stretching machine. As a result, it is difficult to stably and continuously conduct the stretch processing. Even in the case where the uniaxially oriented film is wound on a roll according to an off-line production system, and the wound uniaxially oriented film is fed to the tenter stretching machine to biaxially stretch the film, it is important from the viewpoint of smoothly producing a biaxially oriented film to prevent the crystallization and shrinkage of the uniaxially oriented film by conducting a cooling step after the primarily stretching step and then wind the cooled film on a roll.

If the uniaxially oriented film shrinks in both longitudinal and crosswise directions, thickness mottling occurs, or waving occurs upon stretch processing. It is presumed that if the uniaxially oriented film shrinks in both longitudinal and crosswise directions, the thickness of a central portion thereof in particular increases, and the crystallization of that portion is caused to further proceed by heat accumulation, so that whitened stripe-like marks are liable to appear.

In the present invention, the cooling step is arranged between the primarily stretching step and the secondarily stretching step, whereby the crystallization of the uniaxially oriented film can be inhibited, and besides the shrinkage in both longitudinal and crosswise directions can be inhibited. Stable and continuous stretch processing can be conducted by virtue of the cooling step, and occurrence of white stripe-like marks attending on crystallization at an unstretched portion or an insufficiently stretched portion in the tenter stretching machine can be inhibited to produce a sequentially biaxially-oriented film excellent in various properties.

In the cooling step, the uniaxially oriented film is caused to pass through within the temperature environment controlled to the temperature within the above range by, for example, cooling means such as water cooling, cooling roll, spot cooler, air conditioner or adjustment of outside air temperature. As the cooling means, is preferred the spot cooler, cooling roll, air conditioner or a combination thereof. At least the surface temperature of the uniaxially oriented film is cooled to a temperature equivalent to the cooling temperature by this cooling step. The passage time within the temperature environment is preferably 2 to 60 seconds, more preferably 5 to 50 seconds from the viewpoint of productivity in case of continuous operation though it varies according to the stretching temperature in the primarily stretching step and the cooling temperature. In case of off-line operation, there is no upper limit of the cooling time, and it is desirable to conduct the cooling from just after the primarily stretching step to just before the secondarily stretching step.

The cooling temperature is 5 to 40°C, preferably 6 to 38°C, more preferably 8 to 35°C. If the cooling temperature is too low, the uniaxially oriented film is overcooled, so that it is difficult to heat such a film to a stretching temperature required for the subsequent secondary stretch processing. If the cooling temperature is too high, the crystallization of the uniaxially oriented film is accelerated, and breaking of the film is liable to occur.

The cooling temperature ($T_2$) is set to a temperature within a range of from 5 to 40°C and lower by at least 5°C than the stretching temperature ($T_1$) in the primarily stretching step, and this temperature difference ($T_1$ - $T_2$) is preferably at least 10°C, more preferably at least 15°C. This temperature difference is made great, whereby the proceeding of

crystallization and shrinkage of the uniaxially oriented film can be rapidly and efficiently inhibited, and moreover the passage time in the cooling step can be shortened.

5. Secondarily stretching step 3

The uniaxially oriented film passed through the cooling step 2 is stretched in a direction perpendicular to the stretching direction in the primarily stretching step 1 at a stretching temperature within a range of from 35 to 60°C and higher by at least 3°C than the cooling temperature in the cooling step 2 in such a manner that a secondary draw ratio falls within a range of from 2.5 to 6.0 times, thereby forming a biaxially oriented film, the area stretch ratio represented by a product (t x m) of the primary draw ratio (t) and the secondary draw ratio (m) of which falls within a range of from 11 to 30 times. This step is referred to as a secondarily stretching step 3. In the secondarily stretching step, the uniaxially oriented film stretched in MD is preferably stretched in a transverse direction (TD) by means of a tenter stretching machine.
The stretching temperature in the secondarily stretching step is 35 to 60°C, preferably 37 to 60°C, often 38 to 55°C. If the stretching temperature in the secondarily stretching step is too high, breaking of the film caused by crystallization of the film occurs during the stretching, so that it is difficult or impossible to conduct a continuous operation. Since moderate thermal hysteresis is applied to the uniaxially oriented film passed through the primarily stretching step 1 and the cooling step 2, the secondary stretch processing can be smoothly conducted even when the stretching temperature is relatively low.
Methods for heating the uniaxially oriented film to a stretching temperature within a range of from 35 to 60°C in the secondarily stretching step include a method of causing the uniaxially oriented film to pass through between heated rolls and a method of causing the uniaxially oriented film to pass through within a dry heat atmosphere.
In the secondarily stretching step, the uniaxially oriented film passed through the cooling step is stretched at a stretching temperature ($T_3$) within a range of from 35 to 60°C and higher by at least 3°C than the cooling temperature ($T_2$) in the cooling step, and this temperature difference ($T_3$ - $T_2$) is preferably at least 5°C, more preferably 5 to 50°C. If this temperature difference is too small, it takes a too long time to heat the uniaxially oriented film cooled to a stretchable temperature, so that productivity is lowered, or difficulty is encountered on the secondary stretch processing.
In the secondarily stretching step, the stretching is conducted in a direction perpendicular to the stretching direction in the primarily stretching step. When the stretching is conducted in the machine direction (MD) in the primarily stretching step, the stretching is conducted in the transverse direction (TD) in the secondarily stretching step. The draw ratio in the secondarily stretching step is preferably 3.0 to 5.5 times, more preferably 3.5 to 5.0 times.
In the present invention, the draw ratios in the respective stretching steps are controlled in such a manner that a biaxially oriented film, the area stretch ratio represented by a product (t x m) of the primary draw ratio (t) and the secondary draw ratio (m) of which falls within a range of from 11 to 30 times, is obtained. This area stretch ratio is preferably 11 to 28 times, more preferably 12 to 26 times, still more preferably 13 to 25 times. If this area stretch ratio is too low, the whitening phenomenon of the resulting film is liable to occur. Therefore, a sequentially biaxially-oriented polyglycolic acid film low in area stretch ratio tends to have a great haze value to deteriorate transparency.
The polyglycolic acid sheet is biaxially stretched, whereby a sequentially biaxially-oriented polyglycolic acid film that exhibits high mechanical properties and excellent oxygen gas barrier property even when its thickness is small and is free of anisotropy in the mechanical properties can be obtained. The area stretch ratio is made high, whereby whitening due to production of an unstretched portion or an insufficiently stretched portion can be prevented. The area stretch ratio is made high, whereby the gas barrier properties and mechanical properties of the resulting film can also be improved.
The gas barrier properties can be quantitatively evaluated by measuring the oxygen transmission coefficient of the biaxially oriented film. The mechanical properties can be quantitatively evaluated by measuring, for example, the falling ball impact strength and puncture strength of the biaxially oriented film.
The stretching speed in the secondarily stretching step is preferably 0.2 to 50 m/min, more preferably 0.5 to 30 m/min. If this stretching speed is too low, the productivity is lowered. If the speed is too high, the time required to heat the uniaxially oriented film to the stretching temperature is insufficient, so that it may be difficult or impossible in some cases to conduct the secondary stretch processing.

6. Heat treatment step 4

After the secondarily stretching step 3, the resultant biaxially oriented film is subjected to a heat treatment at a temperature within a range of from 70 to 200°C. This step is referred to as a heat treatment step 4. In this heat treatment step, the biaxially oriented film is preferably subjected to a heat treatment by causing the film to pass through in a tensed state in a dry heat atmosphere controlled to a temperature within a range of from 70 to 200°C.
In order to subject the biaxially oriented film to the heat treatment in a tensioned state, is preferably adopted a method, in which the biaxially oriented film is subjected to the heat treatment in a tensioned state in, for example, a

tenter stretching machine in such a manner that the film does not shrink in both transverse and machine directions. The heat treatment may be conducted on both inside and outside of the tenter stretching machine.

The heat treatment temperature is preferably 80 to 130°C, more preferably 100 to 160°C from the viewpoint of heat treatment efficiency. The heat treatment time is preferably from 30 seconds to 5 minutes, more preferably from 1 to 3 minutes. The molecular orientation in the biaxially oriented film is set by this heat treatment, thereby inhibiting the heat shrinkage of the film. If the heat treatment temperature is too low, it is difficult to sufficiently conduct heat setting, so that the resistance to heat shrinkage of the biaxially oriented film is deteriorated.

Unless the heat setting of the sequentially biaxially-oriented film is conducted by the heat treatment, shrinkage of the film occurs, and a shrunk portion whitens or becomes almost the same as the unstretched sheet to deteriorate the gas barrier properties.

7. Sequentially biaxially-oriented polyglycolic acid film

The sequentially biaxially-oriented polyglycolic acid film according to the present invention is a sequentially biaxially-oriented polyglycolic acid film formed of a resin material comprising a crystalline polyglycolic acid containing a repeating unit represented by the formula 1 in a proportion of at least 60% by mass, wherein the film has the following various properties:

(a) the oxygen transmission coefficient is within a range of from 1.0 x $10^{-14}$ to 1.0 x $10^{-12}$ $cm^3 \cdot cm/cm^2 \cdot s \cdot cmHg$ as measured under conditions of a temperature of 23°C and a relative humidity of 80%,
(b) the falling ball strength is within a range of 50 to 300 J/m as measured under conditions of a temperature of 23°C and a relative humidity of 50%,
(c) the puncture strength is within a range of from 6 to 30 J/m as measured under conditions of a temperature of 23°C and a relative humidity of 50%, and
(d) the haze value is within a range of from 0.01 to 10% as measured by using a sample obtained by cutting out a central portion in the width direction of the film into a square of 5 cm x 5 cm in accordance with Japanese Industrial Standard JIS K 7361.

Since the sequentially biaxially-oriented polyglycolic acid film according to the present invention is uniformly biaxially stretched and heat-set, the film uniformly crystallizes in the end and is free of whitening and thickness mottling and excellent in gas barrier properties, mechanical properties and transparency.

The oxygen transmission coefficient of the sequentially biaxially-oriented polyglycolic acid film according to the present invention is within a range of preferably from 1.0 x $10^{-14}$ to 8.0 x $10^{-13}$ $cm^3 \cdot cm/cm^2 \cdot s \cdot cmHg$, more preferably from 1.3 x $10^{-14}$ to 7.0 x $10^{-13}$ $cm^3 \cdot cm/cm^2 \cdot s \cdot cmHg$. The smaller oxygen transmission coefficient indicates that the sequentially biaxially-oriented polyglycolic acid film according to the present invention is excellent in gas barrier properties, particularly oxygen gas barrier property. Therefore, the sequentially biaxially-oriented polyglycolic acid film according to the present invention is suitable for use in uses such as food packaging materials of which oxygen gas barrier property is required.

The falling ball impact strength of the sequentially biaxially-oriented polyglycolic acid film according to the present invention is within a range of preferably from 60 to 300 J/m, more preferably from 70 to 280 J/m. Since the sequentially biaxially-oriented polyglycolic acid film according to the present invention is excellent in falling ball impact strength, the film can exhibit a feature hard to be broken even when various impacts are applied thereto when the film is used as a packaging material.

The puncture strength of the sequentially biaxially-oriented polyglycolic acid film according to the present invention is within a range of preferably from 7 to 30 J/m, more preferably from 8 to 25 J/m. Since the sequentially biaxially-oriented polyglycolic acid film according to the present invention is excellent in puncture strength, the film is hard to make holes or to be broken even when the film comes into contact with a projection or the like when the film is used as a packaging material.

In the sequentially biaxially-oriented polyglycolic acid film according to the present invention, occurrence of whitening or stripe-like marks due to proceeding of crystallization at a central portion in the width direction of the film, which becomes a problem particularly in the sequentially biaxially-stretching process, is inhibited. Therefore, the sequentially biaxially-oriented polyglycolic acid film according to the present invention exhibits a low haze value within a range of from 0.01 to 10%, preferably from 0.01 to 9.0%, more preferably from 0.01 to 8.0% as measured by using a sample obtained by cutting out a central portion in the width direction of the film into a square of 5 cm x 5 cm and is thus excellent in transparency. Quite naturally, the sequentially biaxially-oriented polyglycolic acid film according to the present invention exhibits the same low haze value at not only the central portion in the width direction, but also the whole of the film and is thus transparent. According to the production process of the present invention, a sequentially biaxially-oriented polyglycolic acid film exhibiting a haze value as extremely low as 0.05 to 1.0% can also be obtained by selecting

a composition of the resin material.

8. Multi-layer film

The sequentially biaxially-oriented polyglycolic acid film according to the present invention may be used in the form of a single layer. However, this film may be multi-layered with various kinds of bases for the purpose of improving the strength, imparting various functions and protecting the sequentially biaxially-oriented polyglycolic acid film.

Examples of the bases include paper, resin films and metal foils. Examples of a thermoplastic resin forming a resin film include polyolefin resins such as polyethylene and polypropylene; thermoplastic polyester resins such as polyethylene terephthalate and polybutylene terephthalate; poly(aromatic vinyl) resins such as polystyrene; chlorine-containing resins such as polyvinyl chloride; polycarbonate resins; cycloolefin resins; polyurethane resins; aliphatic polyester resins such as polylactic acid, polysuccinates and polycaprolactones; polyamide; and EVOH.

These resin films may be unstretched sheets or films, or uniaxially or biaxially oriented films. A thermoplastic polyester resin film and/or a polyamide film is laminated on the sequentially biaxially-oriented polyglycolic acid film, whereby functions such as mechanical strength, heat resistance, resistance to hydrolysis, abrasion resistance and abuse resistance can be imparted to the sequentially biaxially-oriented polyglycolic acid film. A film of a polyolefin resin such as polyethylene is laminated on the sequentially biaxially-oriented polyglycolic acid film, whereby functions such as heat sealability and moisture absorption resistance can be imparted to the sequentially biaxially-oriented polyglycolic acid film. The resin film may be provided with a metal foil or a deposition film of a metal oxide on the surface thereof.

Paper is laminated on the sequentially biaxially-oriented polyglycolic acid film, whereby the appearance thereof can be improved, and suitability for printing can be imparted to the sequentially biaxially-oriented polyglycolic acid film. A metal foil is laminated on the sequentially biaxially-oriented polyglycolic acid film, whereby light screening property can be imparted to the sequentially biaxially-oriented polyglycolic acid film, and the appearance thereof can be improved.

Production processes of the multi-layer film include a fusion-bonding process, a lamination process (for example, dry lamination, hot-melt lamination, wet lamination or nonsolvent lamination) and an extrusion coating process. Among these, the dry lamination process, in which lamination is conducted with an adhesive, is particularly preferred because various properties of the sequentially biaxially-oriented polyglycolic acid film are not inhibited.

According to the dry lamination process, an adhesive of a solution type, latex type or dispersion type is applied to the surface of the resin film or the surface of the sequentially biaxially-oriented polyglycolic acid film, the adhesive is dried by vaporizing off a solvent, and both films are then combined and bonded under pressure while heating them by hot rolling or hot pressing, thereby producing a multi-layer film.

According to the hot-melt lamination process, a hot-melt type adhesive (for example, ethylene-vinyl acetate copolymer adhesive) is applied to the surface of the resin film or the surface of the sequentially biaxially-oriented polyglycolic acid film, and both films are combined and then heated and bonded under pressure to laminate them. The multi-layer film may also be produced by a process, in which the hot-melt type adhesive is heated and melted and then applied to the surface of one film, said one film is combined with the other film, and both films are bonded under pressure to laminate them, or a process, in which a dry film of the adhesive is inserted between the resin film and the sequentially biaxially-oriented polyglycolic acid film, and both films are heated and bonded under pressure to laminate them.

According to the extrusion coating process, a resin material forming the resin film is fed to an extruder equipped with a T-die and melt-extruded from the T-die to uniformly coat the surface of the sequentially biaxially-oriented polyglycolic acid film with a film in a molten state, thereby producing a multi-layer film.

In the multi-layer film, an adhesive layer can be generally interposed between respective layers for the purpose of enhancing interlayer separation strength. As the adhesive, may be used a resin composition comprising, as a main component of a medium, for example, a polyester resin, a polyamide resin, a polyurethane resin, an epoxy resin, a phenol resin, an acrylic resin, a methacrylic resin, a polyvinyl acetate resin, a polyolefin resin such as polyethylene or polypropylene or a copolymer or modified resin thereof, or a cellulose resin.

As examples of the layer structure of the multi-layer film, may be mentioned the following when the sequentially biaxially-oriented polyglycolic acid film is transcribed as "PGA":

PGA/resin film,
Resin film/PGA/resin film,
PGA/resin film/PGA/resin film,
Resin film/PGA/resin film/PGA/resin film,
PGA/paper,
Paper/PGA/paper,
Paper/PGA/metal foil,
Resin film/PGA/paper,
PGA/metal foil,

Resin film/PGA/metal foil,
PGA/resin film/metal foil, and
PGA/metal foil/resin film.

EXAMPLES

The present invention will hereinafter be described more specifically by the following Examples and Comparative Examples. However, the present invention is not limited to these examples alone. Measuring methods or evaluating methods of physical properties and other properties in the present invention are as follows.

(1) Film-forming property

Film-forming property upon production of a biaxially oriented film was evaluated according to the following 3-rank standard.

A: Excellent in film-forming property.
None of breaking, waving and a shrunk portion of a film occur in a stretching step, a uniaxially oriented film is smoothly introduced into a tenter stretching machine, and sequential biaxial stretching can be continuously and stably performed.
B: Capable of forming a film.
Sequential biaxial stretching can be performed, but a film is easy to be broken during a biaxially stretching step because crystallization of a uniaxially oriented film occurs.
C: Difficult to form a film.
Breaking of a film occurs during a uniaxially stretching step, or a shrunk portion occurs in a uniaxially oriented film, so that it is difficult to introduce the uniaxially oriented film into a tenter stretching machine, or breaking of a film occurs during a biaxially stretching step.

(2) Oxygen transmission coefficient

The oxygen transmission rate of a film sample was measured by means of an oxygen transmission rate measuring apparatus "MOCON OX-TRAN 2/20 MODEL" (trademark) manufactured by MODERN CONTROL CO. under conditions of a temperature of 23°C and a relative humidity of 80% in accordance with the method prescribed in Japanese Industrial Standard JIS K 7126 (equal pressure method), and the oxygen transmission coefficient ($cm^3 \cdot cm/cm^2 \cdot sec \cdot cmHg$) of the film was calculated out on the basis of the measured result and the thickness of the film.

(3) Falling ball impact strength

The falling ball impact strength (J/m) of a film sample cut into a circle having a diameter of 3.8 cm was measured by means of a drop weight tester manufactured by Rheometrics Inc. under conditions of a probe load of 100 lb, a probe diameter of 1.27 cm and a falling ball speed of 333.3 cm/sec under an environment of a temperature of 23°C and a relative humidity of 50%.

(4) Puncture strength

A film sample cut into a circle having a diameter of 45 mm was punctured with a semi-circular needle having a punch tip angle of 0.5 mm R and a tip diameter of 1 mm by means of TENSILON RC-121OA (trademark) manufactured by ORIENTEC CO., LTD. under an environment of a temperature of 23°C and a relative humidity of 50% to measure a maximum load (J/m) at the time the film sample was pierced by the needle.

(5) Haze

The haze value of a film sample obtained by cutting out a central portion in a width direction of a film into a square of 5 cm x 5 cm was measured by means of a haze meter ("Haze Meter NDH2000" manufactured by Nippon Denshoku Kogyo K.K. in accordance with Japanese Industrial Standard JIS K 7361.

(6) Appearance

The appearance of a sequentially biaxially-oriented film was evaluated in accordance with the following standard.

A: Good in appearance because neither thickness mottling nor whitening was observed.
B: Stripe-like whitening was somewhat observed.
C: Whitening was clearly observed in the film.

<Kind of resin>

The following resins were used in Examples and Comparative Examples.
(1) PGA-1:

PGA-1 is a polyglycolic acid homopolymer. PGA-1 has a melt viscosity of 1,600 Pa·s as measured at a temperature (Tm+20°C) higher by 20°C than the melting point Tm of the homopolymer and a shear rate of 122 $sec^{-1}$ and contains, as a heat stabilizer, ADEKA STAB AX-71 (trademark) (product of ADEKA CORPORATION; 50 mol% of monostearyl phosphate and 50 mol% of distearyl phosphate) in a proportion of 300 ppm.

(2) PGA-2:

PGA-2 is a polyglycolic acid homopolymer. PGA-2 is obtained by capping a terminal carboxyl group of polyglycolic acid by reacting 0.5 parts by mass ofN,N-2,6-diisopropylphenylcarbodiimide with 100 parts by mass of the polyglycolic acid upon synthesis. PGA-2 has a melt viscosity of 1,200 Pa·s as measured at a temperature (Tm+20°C) and a shear rate of 122 $sec^{-1}$ and contains ADEKA STAB AX-71 (product of ADEKA CORPORATION) in a proportion of 300 ppm.

(3) GA/LA (90/10):

GA/LA (90/10) is a 90:10 (mass ratio) copolymer of glycolide and L-lactide. GA/LA (90/10) has a melt viscosity of 1,100 Pa·s as measured at a temperature (Tm+20°C) and a shear rate of 122 $sec^{-1}$ and contains ADEKA STAB AX-71 (product of ADEKA CORPORATION) in a proportion of 300 ppm.

(4) PGA+PLA (95/5):

PGA+PLA (95/5) is a 95:5 (mass ratio) blend of the polyglycolic acid (PGA-1) and polylactic acid (PLA). PLA is polylactic acid "LACEA H-400" [product of Mitsui Chemicals Inc.; melting point: 166°C, melt flow rate (MFR) at 190°C: 3.0 g/10 min].

(5) PGA+PP (90/10):

PGA+PP (90/10) is a 90:10 (mass ratio) blend of the polyglycolic acid (PGA-2) and polypropylene (PP). PP is "NOVATEC PP F203T" (trademark) [product of Japan Polypropylene Corporation; melting point: 165°C, MFR: 2.5 g/10 min].

(6) GA/CL (84/16)

GA/CL (84/16) is a 84:16 (mass ratio) copolymer of glycolide and ε-caprolactone. GA/CL (84/16) has a melt viscosity of 980 Pa·s as measured at a temperature (Tm+20°C) and a shear rate of 122 $sec^{-1}$ and contains ADEKA STAB AX-71 (product of ADEKA CORPORATION) in a proportion of 300 ppm.
(7) GA/LA (40/60):

GA/LA (40/60) is a 40:60 (mass ratio) copolymer of glycolide and L-lactide. GA/LA (40/60) has a melt viscosity of 950 Pa·s as measured at a temperature (Tm+20°C) and a shear rate of 122 $sec^{-1}$ and contains ADEKA STAB AX-71 (product of ADEKA CORPORATION) in a proportion of 300 ppm.

[Example 1]

Raw pellets of PGA-1 were heated and melted by means of a single-screw extruder having a screw diameter of 35 mm so as to give a resin temperature of 260 to 270°C. The resultant melt was caused to pass through a filter having a pore size of 100 μm and extruded from a T-die having a linear lip having a length of 270 mm and an interstice of 0.75 mm and cast on a metal drum kept at a surface temperature of 40°C, thereby cooling the extrudate to prepare an unstretched sheet having a thickness of 200 μm

The unstretched sheet controlled to a sheet temperature of 60°C was uniaxially stretched in a machine direction (MD) at a stretching speed of 2 m/min by means of stretching rolls so as to give a draw ratio of 6.0 times (Step 1).

The resultant uniaxially oriented film was then cooled for about 15 seconds by means of a spot cooler and a cooling roll in such a manner that the surface temperature of the film is 33°C (Step 2).

The uniaxially oriented film was then introduced into a tenter stretching machine and stretched in a transverse direction (TD) at a film temperature of 38°C so as to give a draw ratio of 3.7 times, thereby preparing a biaxially oriented film having an area stretch ratio of 22 times (Step 3).

After the stretching, the biaxially oriented film was immediately subjected to a heat treatment in the tenter stretching machine at a temperature of 145°C under a dry heat atmosphere, thereby preparing a sequentially biaxially-oriented film (Step 4).

Operation conditions in the respective steps and an evaluated result of film-forming property are shown in Table 1, and measured results of the sequentially biaxially-oriented film as to oxygen transmission coefficient, falling ball impact strength, puncture strength and haze value, and an evaluated result as to appearance are shown in Table 2.

[Example 2]

A sequentially biaxially-oriented film was prepared in the same manner as in Example 1 except that the operation conditions in Steps 1 to 4 were changed to conditions shown in Table 1. The operation conditions and results are shown in Tables 1 and 2.

[Example 3]

A sequentially biaxially-oriented film was prepared in the same manner as in Example 1 except that the operation conditions in Steps 1 to 4 were changed to conditions shown in Table 1. The operation conditions and results are shown in Tables 1 and 2.

[Example 4]

An unstretched sheet having a thickness of 200 μm was prepared in the same manner as in Example 1 except that PGA-2 was used in place of PGA-1. A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Example 5]

An unstretched sheet having a thickness of 200 μm was prepared in the same manner as in Example 1 except that PGA-2 was used in place of PGA-1. A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Example 6]

An unstretched sheet having a thickness of 200 μm was prepared in the same manner as in Example 1 except that GA/LA (90/10) was used in place of PGA-1. A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Example 7]

Respective pellets of the polyglycolic acid (PGA-1) and polylactic acid "LACEA H-400" (trademark) (product of Mitsui Chemicals Inc.) were blended by hand so as to give a mass ratio of 95 to 5. The resultant blend was melted and kneaded at 240°C by means of a twin-screw extruder (LT-30) (manufactured by Toyo Seiki Co., Ltd.) to prepare pellets [PGA+PLA(95:5)]. The resultant pellets were heated by means of a single-screw extruder having a screw diameter of 35 mm in such a manner that the resin temperature reaches 260 to 270°C, and melted. The resultant melt was caused to pass through a filter having a pore size of 100 μm and extruded from a T-die having a linear lip having a length of 270 mm and an interstice of 0.75 mm and cast on a metal drum kept at a surface temperature of 40°C, thereby cooling the extrudate to prepare an unstretched sheet having a thickness of 200 μm.

A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Example 8]

After respective pellets of the polyglycolic acid (PGA-2) and polypropylene "NOVATEC PP F203T" (trademark) (product of Japan Polypropylene Corporation) were blended by hand so as to give a mass ratio of 90 to 10, an unstretched sheet was prepared in the same manner as in Example 7.

A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Example 9]

An unstretched sheet having a thickness of 200 μm was prepared in the same manner as in Example 1 except that GA/CL (84/16) was used in place of PGA-1. A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2.

[Comparative Example 1]

PGA-1 was used to prepare an unstretched sheet having a thickness of 200 μm in the same manner as in Example 1. It was attempted to prepare a sequentially biaxially-oriented film in the same manner as in Example 1 except that this unstretched sheet was used, and the operation conditions were changed to conditions shown in Table 1.

Specifically, in Step 1, the unstretched sheet controlled to a sheet temperature of 80°C was uniaxially stretched in a machine direction (MD) at a stretching speed of 2 m/min by means of stretching rolls so as to give a draw ratio of 4.0 times. Upon this uniaxial stretching, breaking of the film intermittently occurred attending on crystallization of the film. Therefore, Steps 2 to 4 could not be performed. The operation conditions and results are shown in Tables 1 and 2.

[Comparative Example 2]

PGA-1 was used to prepare an unstretched sheet having a thickness of 200 μm in the same manner as in Example 1. It was attempted to prepare a sequentially biaxially-oriented film in the same manner as in Example 1 except that this unstretched sheet was used, and the operation conditions were changed to conditions shown in Table 1.

Specifically, in Step 1, the unstretched sheet controlled to a sheet temperature of 50°C was uniaxially stretched in a machine direction (MD) at a stretching speed of 2 m/min by means of stretching rolls so as to give a draw ratio of 8.0 times. Upon this uniaxial stretching, breaking of the film due to an excess of stretching occurred. Therefore, Steps 2 to 4 could not be performed. The operation conditions and results are shown in Tables 1 and 2.

[Comparative Example 3]

PGA-1 was used to prepare an unstretched sheet having a thickness of 200 μm in the same manner as in Example 1. It was attempted to prepare a sequentially biaxially-oriented film in the same manner as in Example 1 except that this unstretched sheet was used, and the operation conditions were changed to conditions shown in Table 1.

Specifically, in Step 1, the unstretched sheet controlled to a sheet temperature of 55°C was uniaxially stretched in a machine direction (MD) at a stretching speed of 2 m/min by means of stretching rolls so as to give a draw ratio of 5.0 times. In the subsequent Step 2, the resultant uniaxially oriented film was aged for 30 seconds in such a manner that the surface temperature of the film is 70°C. As a result, shrinking and crystallization of the uniaxially oriented film occurred, so that it was difficult to introduce the uniaxially oriented film into a tenter stretching machine, and so biaxial stretching by the tenter stretching machine could not be performed. The operation conditions and results are shown in Tables 1 and 2.

[Comparative Example 4]

PGA-1 was used to prepare an unstretched sheet having a thickness of 200 μm in the same manner as in Example 1. It was attempted to prepare a sequentially biaxially-oriented film in the same manner as in Example 1 except that this unstretched sheet was used, and the operation conditions were changed to conditions shown in Table 1.

Specifically, in Step 1, the unstretched sheet controlled to a sheet temperature of 45°C was uniaxially stretched

in a machine direction (MD) at a stretching speed of 2 m/min by means of stretching rolls so as to give a draw ratio of 4.5 times. In the subsequent Step 2, the resultant uniaxially oriented film was cooled for about 15 seconds by means of a spot cooler and a cooling roll in such a manner that the surface temperature of the film is 20°C.

It was then attempted to prepare a biaxially oriented film having an area stretch ratio of 20 times by introducing the uniaxially oriented film into a tenter stretching machine and stretching the film in a transverse direction (TD) at a film temperature of 65°C so as to give a draw ratio of 4.5 times (Step 3). However, breaking of the film due to crystallization occurred during the stretching in Step 3, so that it was difficult to conduct a continuous operation. Therefore, measurements of physical properties and evaluation of properties of the biaxially oriented film were not made.

[Comparative Example 5]

PGA-1 was used to prepare an unstretched sheet having a thickness of 200 μm in the same manner as in Example 1. A sequentially biaxially-oriented film was prepared in the same manner as in Example 1 except that this unstretched sheet was used, and the operation conditions were changed to conditions shown in Table 1. Since the area stretch ratio of the resultant sequentially biaxially-oriented film was as low as 9 times, whitening of the film was observed. The whitening phenomenon was observed at a central portion in the width direction of the film as clear longitudinal stripes. Therefore, the haze value of the sequentially biaxially-oriented film was as great as 89.0%, and so the film was poor in transparency.

[Comparative Example 6]

An unstretched sheet having a thickness of 200 μm was prepared in the same manner as in Example 1 except that GA/LA (40/60) was used in place of PGA-1. A sequentially biaxially-oriented film was prepared in the same manner as in Example 1 except that this unstretched sheet was used, and the operation conditions in Steps 1 to 4 were changed to conditions shown in Table 1. The operation conditions and results are shown in Tables 1 and 2. Since the proportion of lactic acid copolymerized in the glycolic acid/lactic acid copolymer as the raw material was high, the resultant sequentially biaxially-oriented film was great in oxygen transmission coefficient and thus poor in gas barrier properties. In addition, the sequentially biaxially-oriented film exhibited relatively low falling ball impact strength and puncture strength values.

[Table 1]

Table 1

| | | Resin | Step 1 | | Step 2 | Step 3 | | | Step 4 | | Film-forming property |
|---|---|---|---|---|---|---|---|---|---|---|---|
| | | | Temperature (°C) | Draw ratio (t times) | Cooling temperature (°C) | Temperature (°C) | Draw ratio (m times) | Area stretch ratio (t x m) | Heat treatment temperature (°C) | Time (min) | |
| Example | 1 | PGA-1 | 60 | 6.0 | 33 | 38 | 3.7 | 22 | 145 | 2 | A |
| | 2 | PGA-1 | 55 | 4.5 | 15 | 45 | 4.4 | 20 | 125 | 2 | A |
| | 3 | PGA-1 | 45 | 3.5 | 10 | 48 | 5.0 | 18 | 130 | 2 | A |
| | 4 | PGA-2 | 48 | 4.0 | 8 | 52 | 4.2 | 17 | 125 | 2 | A |
| | 5 | PGA-2 | 50 | 4.0 | 20 | 45 | 4.5 | 18 | 125 | 2 | A |
| | 6 | GA/LA(90/10) | 60 | 4.7 | 12 | 45 | 4.5 | 21 | 130 | 2 | A |
| | 7 | PGA+PLA(95:5) | 58 | 4.8 | 15 | 50 | 4.3 | 21 | 125 | 2 | A |
| | 8 | PGA+PP(90:10) | 65 | 4.0 | 35 | 60 | 3.8 | 15 | 120 | 2 | A |
| | 9 | GA/CL(84/16) | 50 | 4.0 | 25 | 45 | 4.0 | 16 | 110 | 2 | A |
| Comp. Example | 1 | PGA-1 | 80 | 4.0 | - | - | - | - | - | - | C |
| | 2 | PGA-1 | 50 | 8.0 | - | - | - | - | - | - | C |
| | 3 | PGA-1 | 55 | 5.0 | 70 | - | - | - | - | - | C |
| | 4 | PGA-1 | 45 | 4.5 | 20 | 65 | 4.5 | 20 | - | - | B |
| | 5 | PGA-1 | 50 | 3.0 | 24 | 52 | 3.0 | 9 | 120 | 2 | A |
| | 6 | GA/LA(40/60) | 65 | 3.5 | 15 | 60 | 3.5 | 12 | 130 | 2 | A |

(Note)

(1) "-" in the Table indicates that the step could not be performed.

[Table 2]

| | | Oxygen transmission coefficient ($cm^3 \cdot cm/cm^2 \cdot s \cdot cmHg$) | Falling ball impact strength (J/m) | Puncture strength (J/m) | Haze (%) | Appearance |
|---|---|---|---|---|---|---|
| Example | 1 | 1.7E-14 | 167 | 13 | 0.1 | A |
| | 2 | 2.2E-14 | 211 | 11 | 0.1 | A |
| | 3 | 1.8E-14 | 150 | 11 | 0.3 | A |
| | 4 | 2.0E-14 | 155 | 12 | 0.4 | A |
| | 5 | 2.7E-14 | 203 | 12 | 0.4 | A |
| | 6 | 9.8E-14 | 180 | 12 | 0.2 | A |
| | 7 | 2.1E-14 | 120 | 10 | 8.0 | A |
| | 8 | 5.2E-13 | 83 | 9 | 9.0 | A |
| | 9 | 6.5E-13 | 113 | 10 | 0.2 | A |
| Comp. Example | 1 | - | - | - | - | - |
| | 2 | - | - | - | - | - |
| | 3 | - | - | - | - | - |
| | 4 | - | - | - | - | - |
| | 5 | 2.3E-14 | 200 | 14 | 89.0 | C |
| | 6 | 1.2E-12 | 65 | 8 | 1.0 | A |

(Note)

(1) The measured value "1.7E-14" of the oxygen transmission coefficient indicates $1.7 \times 10^{-14}$. Other measured values are also indicated by the same notation.

(2) Notation by "-" in the Table indicates that the measurement could not be done.

[Example 10]

A two-component curing type polyurethane adhesive for lamination (comprising polyesterpolyol as a main component and aliphatic isocyanate as a curing agent) was coated on one surface of the sequentially biaxially-oriented film obtained in Example 4 using a gravure roll coating method to form an adhesive layer for lamination having a dry coating weight of 3.0 $g/m^2$. Art paper ("OK KINFUJI KATAMEN", product of Oji Paper Co., Ltd.; thickness: 120 μm, product with one side corona treated) was laminated on the surface of this adhesive layer and dried for 48 hours at a temperature of 40°C in a Geer oven to prepare a multi-layer film. The oxygen transmission coefficient of the resultant multi-layer film was measured at a temperature of 23°C and a relative humidity of 80%. The result is shown in Table 3.

[Example 11]

A multi-layer film was prepared in the same manner as in Example 10 except that a biaxially oriented polyethylene terephthalate film ("LUMIRROR P60", product of Toray Industries, Inc.; thickness: 12 μm, product with one side corona treated) was used in place of the art paper. The result is shown in Table 3.

[Example 12]

A multi-layer film was prepared in the same manner as in Example 10 except that an unstretched polyethylene (LLDPE) film ("T.U.X-HC", product of TOHCELLO CO., LTD.; thickness: 30 μm, product with one side corona treated) was used in place of the art paper. The result is shown in Table 3.

[Example 13]

A multi-layer film was prepared in the same manner as in Example 10 except that a biaxially oriented nylon 6 film ("EMBLEM ONBC", product of UNITIKA LTD.; thickness: 15 μm, product with one side corona treated) was used in place of the art paper. The result is shown in Table 3.
[Table 3]

| | Multi-layer film | | | |
|---|---|---|---|---|
| | Biaxially oriented PGA film (kind) | Coating weight of PU adhesive ($g/m^2$) | Base (kind) | Oxygen transmission coefficient ($cm^3 \cdot cm/cm^2 \cdot s \cdot cmHg$) |
| Ex.10 | Example 4 (PGA-2) | 3.0 | Art paper | 22E-14 |
| Ex.11 | Example 4 (PGA-2) | 3.0 | #12PET | 2.0E-14 |
| Ex.12 | Example 4 (PGA-2) | 3.0 | #30 PE | 2.1E-14 |
| Ex.13 | Example 4 (PGA-2) | 3.0 | #15 ONy | 2.1E-14 |

INDUSTRIAL APPLICABILITY

The sequentially biaxially-oriented polyglycolic acid film according to the present invention can be utilized in a wide variety of technical fields of, for example, packaging materials for foods, medicines, electronic materials, etc.; and medical materials for culture sheets, artificial skins, scaffolds, etc.

## Claims

1. A production process of a sequentially biaxially-oriented polyglycolic acid film, comprising the following Steps 1 to 4:

(1) Step 1 of stretching an amorphous polyglycolic acid sheet formed from a resin material comprising a crystalline polyglycolic acid containing a repeating unit represented by the following formula 1

[Chem. 1]

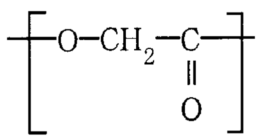

(1)

in a proportion of at least 60% by mass in one direction at a stretching temperature within a range of from 40 to 70°C in such a manner that a primary draw ratio falls within a range of from 2.5 to 7.0 times, thereby forming

a uniaxially oriented film;

(2) Step 2 of causing the uniaxially oriented film to pass through within a temperature environment controlled to a temperature within a range of from 5 to 40°C and lower by at least 5°C than the stretching temperature in Step 1;

(3) Step 3 of stretching the uniaxially oriented film passed through Step 2 in a direction perpendicular to the stretching direction in Step 1 at a stretching temperature within a range of from 35 to 60°C and higher by at least 3°C than the temperature in Step 2 in such a manner that a secondary draw ratio falls within a range of from 2.5 to 6.0 times, thereby forming a biaxially oriented film, the area stretch ratio represented by a product of the primary draw ratio and the secondary draw ratio of which falls within a range of from 11 to 30 times; and

(4) Step 4 of subjecting the biaxially oriented film to a heat treatment at a temperature within a range of from 70 to 200°C.

**2.** The production process according to claim 1, wherein the crystalline polyglycolic acid is a polyglycolic acid homopolymer or a ring-opening copolymer of glycolide and at least one cyclic monomer selected from the group consisting of ethylene oxalate, lactide, lactones, trimethylene carbonate and 1,3-dioxane.

**3.** The production process according to claim 1, wherein the resin material comprises, as a resin component, a crystalline polyglycolic acid or a mixture of at least 70% by mass of the crystalline polyglycolic acid and at most 30% by mass of another thermoplastic resin.

**4.** The production process according to claim 1, wherein the polyglycolic acid sheet is an amorphous polyglycolic acid sheet formed by a process, in which the resin material comprising the crystalline polyglycolic acid is melted and kneaded in an extruder and melt-extruded into a sheet from a T-die provided at the tip of the extruder, and the molten sheet is cast and quenched on a metal drum kept at a surface temperature within a range of from 5 to 70°C.

**5.** The production process according to claim 1, wherein in Step 1, the amorphous polyglycolic acid sheet is uniaxially stretched in a machine direction (MD) by means of stretching rolls.

**6.** The production process according to claim 1, wherein in Step 1, the amorphous polyglycolic acid sheet is stretched in one direction at a stretching temperature within a range of from 43 to 68°C in such a manner that the primary draw ratio falls within a range of from 3.0 to 6.5 times, thereby forming a uniaxially oriented film.

**7.** The production process according to claim 1, wherein in Step 2, the uniaxially oriented film is caused to pass through in a passage time of 2 to 60 seconds within the temperature environment controlled to the temperature within the above range by cooling means composed of a spot cooler, a cooling roll, an air conditioner or a combination thereof.

**8.** The production process according to claim 1, wherein in Step 2, the uniaxially oriented film is caused to pass through within the temperature environment controlled to a temperature within a range of from 6 to 38°C and lower by at least 10°C than the stretching temperature in Step 1.

**9.** The production process according to claim 1, wherein in Step 3, the uniaxially oriented film is stretching in a transverse direction (TD) by means of a tenter stretching machine.

**10.** The production process according to claim 1, wherein in Step 3, the uniaxially oriented film is stretched in a direction perpendicular to the stretching direction in Step 1 at a stretching temperature within a range of from 37 to 60°C and higher by at least 5°C than the temperature in Step 2 in such a manner that the secondary draw ratio falls within a range of from 3.0 to 5.5 times, thereby forming a biaxially oriented film, the area stretch ratio represented by a product of the primary draw ratio and the secondary draw ratio of which falls within a range of from 11 to 28 times.

**11.** The production process according to claim 1, wherein in Step 4, the biaxially oriented film is subjected to the heat treatment by causing the film to pass through in a tensed state in a dry heat atmosphere controlled to a temperature within a range of from 70 to 200°C.

**12.** A sequentially biaxially-oriented polyglycolic acid film formed of a resin material comprising a crystalline polyglycolic acid containing a repeating unit represented by the following formula 1

[Chem. 2]

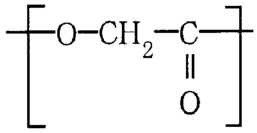

(1)

in a proportion of at least 60% by mass, wherein

(a) the oxygen transmission coefficient of the film is within a range of from 1.0 x $10^{-14}$ to 1.0 x $10^{-12}$ $cm^3 \cdot cm/cm^2 \cdot s \cdot cmHg$ as measured under conditions of a temperature of 23°C and a relative humidity of 80%,
(b) the falling ball strength of the film is within a range of 50 to 300 J/m as measured under conditions of a temperature of 23°C and a relative humidity of 50%,
(c) the puncture strength of the film is within a range of from 6 to 30 J/m as measured under conditions of a temperature of 23°C and a relative humidity of 50%, and
(d) the haze value of the film is within a range of from 0.01 to 10% as measured by using a sample obtained by cutting out a central portion in the width direction of the film into a square of 5 cm x 5 cm in accordance with Japanese Industrial Standard JIS K 7361.

**13.** The sequentially biaxially-oriented polyglycolic acid film according to claim 12, wherein the oxygen transmission coefficient as measured under conditions of a temperature of 23°C and a relative humidity of 80% is within a range of from 1.0 x $10^{-14}$ to 8.0 x $10^{-13}$ $cm^3 \cdot cm/cm^2 \cdot s \cdot cmHg$.

**14.** The sequentially biaxially-oriented polyglycolic acid film according to claim 12, wherein the haze value is within a range of from 0.01 to 9.0%.

**15.** The sequentially biaxially-oriented polyglycolic acid film according to claim 12, which is obtained by the production process according to claim 1.

**16.** A multi-layer film having a layer structure with the sequentially biaxially-oriented polyglycolic acid film according to claim 12 laminated on a base.

**17.** The multi-layer film according to claim 16, wherein the base is paper, a resin film or a metal foil.

**18.** The multi-layer film according to claim 17, wherein the resin film is a thermoplastic resin film formed from a polyolefin resin, a thermoplastic polyester resin, a poly(aromatic vinyl) resin, a chlorine-containing resin, a polycarbonate resin, an aliphatic polyester resin, polyamide or an ethylene-vinyl alcohol copolymer.

**19.** The multi-layer film according to claim 16, which has a layer structure that the sequentially biaxially-oriented polyglycolic acid film and the base are laminated through an adhesive layer.

**20.** The multi-layer film according to claim 16, wherein when the sequentially biaxially-oriented polyglycolic acid film is transcribed as PGA, the film has a layer structure of PGA/resin film, resin film/PGA/resin film, PGA/resin film/PGA/resin film, resin film/PGA/resin film/PGA/resin film, PGA/paper, paper/PGA/paper, paper/PGA/metal foil, resin film/PGA/paper, PGA/metal foil, resin film/PGA/metal foil, PGA/resin film/metal foil or PGA/metal foil/resin film.

**INTERNATIONAL SEARCH REPORT**

International application No.
PCT/JP2009/050965

A. CLASSIFICATION OF SUBJECT MATTER
*B29C55/14*(2006.01)i, *C08J5/18*(2006.01)i, *B29K67/00*(2006.01)n, *B29L7/00*(2006.01)n

According to International Patent Classification (IPC) or to both national classification and IPC

B. FIELDS SEARCHED

Minimum documentation searched (classification system followed by classification symbols)
B29C55/00-55/30, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2007-217602 A (Kureha Corp.), 30 August, 2007 (30.08.07), Full text (Family: none) | 1-20 |
| A | JP 2007-326290 A (Kureha Corp.), 20 December, 2007 (20.12.07), Full text (Family: none) | 1-20 |
| A | JP 2006-182017 A (Unitika Ltd.), 13 July, 2006 (13.07.06), Full text (Family: none) | 1-20 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 April, 2009 (03.04.09) | 14 April, 2009 (14.04.09) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2009/050965

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-60136 A (Kureha Chemical Industry Co., Ltd.), 03 March, 1998 (03.03.98), Full text & US 5853639 A & EP 805175 A1 & DE 69730771 D & DE 69730771 T & KR 10-0233184 B | 1-20 |
| A | JP 2007-176000 A (Daicel Chemical Industries, Ltd.), 12 July, 2007 (12.07.07), Full text (Family: none) | 1-20 |
| A | JP 2007-284595 A (Daicel Chemical Industries, Ltd.), 01 November, 2007 (01.11.07), Full text (Family: none) | 1-20 |
| E,A | JP 2009-40917 A (Kureha Corp.), 26 February, 2009 (26.02.09), Full text (Family: none) | 1-20 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10060136 A
- JP 2006130848 A
- JP 2006182017 A
- US 5853639 A